# EUROPEAN PATENT APPLICATION

(11) **EP 0 982 739 A1**
(43) Date of publication of application: **01.03.2000**
(21) Application number: 99203759.8
(22) Date of filing: 15.04.1993
(51) Int. Cl.: H01B 1/12, C08K 3/10, C08K 3/16, C08K 3/00, C08K 5/09, G03G 15/16, C08K 5/098

(54) **Electrically conductive and semi-conductive polymers**

(30) Priority: 16.04.1992 US 870610
(62) Divisional of application: 93302947.2
(71) Applicant: MEARTHANE PRODUCTS CORP., Cranston, Rhode Island 02921 (US)
(72) Inventor: Chiang, Albert C., Danburry, Connecticut 06811 (US); Roderick, John A., Scituate, Rhode Island 02831 (US); Martins, Marcelino A., Coventry, Rhode Island 02816 (US); Martins, George B., Coventry, Rhode Island 02816 (US); Chen, Wen-Pin, Cranston, Rhode Island 02920 (US)
(74) Representative: Bowman, Paul Alan

(57) **Abstract**

An electrically conductive or semi-conductive polymeric material includes a metal salt dissolved in a polymer. The metal salt is complexed with the polymer, which is what provides the material with its conductive properties. The material has a resistivity of between 10⁵ and 10¹² ohms-cm.

## Description

This invention relates to the field of polymers, and particularly to a method of making such polymers electrically conductive or electrically semi-conductive.

In the prior art, polymers, particularly urethane rubber, have been used for a variety of applications in which it is desirable that the product have some electrical conductivity, either throughout the product itself or at least on the exposed surface of the product.

One example involves rollers used in many printers to help transport paper or carry toner in electrographic printing. The rollers are often made of a polymer such as polyurethane or covered with a similar polymer to facilitate their paper-carrying or toner transfer ability. Different materials, including rubber, may be used in place of polymers for these applications, but because these polymers are much more durable than rubber, they are preferred. Most polymers do not conduct electricity, however, and static charges, which adversely effect the operation of the printer, can build up on the rollers. A similar problem exists if rollers of the same material are used for other purposes, such as carrying semiconductors as part of a semiconductor manufacturing process. Other end uses require conductive or semi-conductive parts as well.

As a result, there have been attempts to make such polymer parts electrically conductive. In some cases, the part made from the polymer has been coated with an electrically conductive material. Unfortunately, these coatings have short life spans, and some are toxic. Another approach has been to disperse an electrically-conductive material in the polymer when the part is being fabricated.

Ehrhart *et al* in US-A-5077330 describe a water reaction synthesis with polyoxyethylene diol, diisocyanate and dibutyltin bis lauryl mercaptide to produce a high molecular weight thermoplastic polyurethane-urea linear polymer with surface resistivity 10¹¹ to 10⁶ ohms/square. Thermoplastic and/or elastomeric antistatic compositions containing other melt processable polymers and/or filler, and the aforesaid polymer are said to exhibit permanent protection. Increased antistatic protection is provided when the polymer complexes with lithium chloride or lithium acetate.

Eastman Kodak Company in EP-A-0421299 describe an electrically biasable transfer member for use in electrostatographic transfer processes for transferring toner images from one support surface to another. The electrically conductive biasable transfer members comprise a conductive substrate capable of supporting a uniform bias potential thereon and at least one coating comprising a resilient cross-linked elastomeric polyurethane formed by reacting (a) a polyisocyanate prepolymer comprising the reaction product of an aliphatic polyisocyanate and a polyether polyol selected from polyalkylene glycol having two to three carbon atoms in the alkylene group, and (b) a hardening mixture comprising a polyether polyol of (a) and, as a conductivity control agent, from 0.01 to 3.0 weight percent based on the total weight of (b) of a complex of an oligoethylene glycol selected from di-, tri- and tetraethylene glycol with an ionizable alkali metal salt selected from sodium iodide, lithium iodide and sodium thiocyanate. Resistivity of the elastomeric resilient polyurethane coating is controlled or adjusted by inclusion of the ionizable alkali metal salt.

EP 544290, published 2nd June, 1993 discloses a member for electrically co-operating with a conductive support surface to attract charged toner particles from the surface towards the member comprising a conductive substrate capable of supporting a uniform bias potential thereon and at least one coating comprising a resilient elastomeric polyurethane characterised in that the resilient elastomeric polyurethane is formed by reacting:
(a) a polyisocyanate prepolymer comprising the reaction product of:
   (i) a saturated aliphatic polyisocyanate, a saturated cycloaliphatic polyisocyanate or an aromatic polyisocyanate; and
   (ii) a polyol free of aliphatic unsaturation; and
(b) a hardening mixture comprising:
   (i) a polyol of (a) (ii) or a diamine free of aliphatic unsaturation, or a mixture thereof; and,
   (ii) as a conductivity control agent for controlling the resistivity of the elastomeric polyurethane, from 0.001 to 5.0 weight percent based on the total weight of (b), of a complex of ethylene glycol or an oligoethylene glycol selected from the group consisting of di-, tri- and tetraethylene glycol with an ionizable ferric halide salt selected from the group consisting of ferric fluoride, ferric chloride and ferric bromide,
      the coating being in electrical contact with the conductive substrate and having an electrical resistivity such that the coating is capable of transmitting a bias potential from the substrate to the outer periphery of the coating.

Electrically-conductive materials sought to be disposed in polymers during fabrication have included metal powders such as silver, copper and nickel, and also materials such as carbon black, graphite, or other conductive polymers. However the resulting product have several serious drawbacks. In the prior art, in order to make the polymer even semi-conductive, a large amount of such conductive fillers, e.g., metal powder like carbon black, had to be used, often as high as 10% to 40% of the overall mixture by weight. This degraded the mechanical and thermal properties of the resulting polymer part. Moreover, because of the size, and nature of the conductive particles, as well as the way in which the particles were mixed with the polymer, conductivity was not very great.

Another related problem is that it is very difficult, due to the relative size and weight of the added particles and the difficulty in dispersing them into the polymeric composition, to achieve a uniform distribution of the conductive material throughout the polymer. As a result of an uneven distribution, the electrical conductivity of the resulting product is not uniform, and the resulting product's mechanical and thermal properties suffer as well. As a result of all this, in general, products made from such compounds have been far less than satisfactory, and in fact, in some applications, become high maintenance items.

Finally, a related problem is that it would often be desirable to be able to select the specific conductivity of an polymer in advance, as different end applications preferentially require parts with different conductivities. Selection was not really possible with the prior art methods of making semi-conductive polymers utilizing the aforesaid metal powders.

In accordance with the present invention there is provided a roller comprising a cylinder having a surface comprising a polyurethane including a solid solution of a transition metal halide salt, the polyurethane comprising less than 5% of the transition metal halide salt by weight, wherein the transition metal halide salt is complexed with said polyurethane to provide the polyurethane with a uniform resistivity of between about 10¹² ohms-cm and 10⁵ ohm-cm.

It will be seen from the detailed description below that we are able to produce electrically conductive polymeric materials without the need for conductive coatings or large amounts of conductive fillers.

The resulting product may have a uniform electrical conductivity throughout. The relative electrical resistance of our electrically conductive polymeric materials may be varied with a high degree of accuracy. The mechanical and thermal properties of the material are not degraded from what would be expected with a similar material which was non-conductive. The polymeric material may be moulded and machined. The resultant electrically-conductive polymeric material is free of voids. The electrically-conductive polymeric material is suitable for use on the surface of rollers, e.g., in a printer, where it inhibits build-up of a static charge on the roller. The polymeric material has good thermal stability.

Our electrically conductive or semi-conductive polymeric material has a resistivity of between 10¹² ohm-cm and 10⁵ohms-cm. The material is a solid solution of a transition metal halide salt dissolved in an elastomeric polyurethane polymer. The metal salt is complexed with the polyurethane polymer, which is what provides the material with its conductive properties. Depending on the desired resistivity, the quantity of metal salt in the material can be varied, although preferably the material includes only a small amount (less than 1%, more preferably less than 0.1%) of the metal salt is included in the material, the material has good mechanical and thermal properties. These properties, coupled with the conductive nature of the material, make the material suitable for use as coatings on, e.g., rollers used on paper printers.

Preferred transition metal halides include CuCl₂, CuBr₂, CoCl₂, ZnCl₂, NiCl₂, FeCl₂, FeBr₂, FeBr₃, CuI₂, FeCl₃, FeI₃, and FeI₂.

Our method of preparing these polymeric materials includes making a homogenous solution of the metal salt in the polymer or polymer precursor, and curing the composition. An isocyanate functional prepolymer together with an extender (polyol or polyamine) reacts with the isocyanate groups during curing to form a polyurethane resin. This method results in an even distribution of the metal salt throughout the polymeric material, which provides the material with uniform conductivity throughout.

The conductive polymeric materials are suitable for use in a variety of industrial applications to control surface charge and to provide good heat conductivity and expanded life. For example, the polymers can be used to coat the belts, shafts, wheels, inserters, and paper handling and copier toner pick-up rollers in paper printers. The polymer can be used to coat car bodies, print circuits, seals, and to dissipate charges in various other electrical applications, such as coating on belts that are used to transport semiconductor wafers during manufacture. The conductive polymeric materials can be used to coat disc drives, machine body parts, cabinets, and carry cases.

Other features and advantages of the invention will be apparent from the description of preferred embodiment thereof, set out below.

The preferred method of preparing the conductive polyurethane polymeric materials is to mix an extender (polyol or amine) or an isocyanate-functional prepolymer with a solution of a metal salt. The mixture is then cured. Of course, other standard ingredients, like a cure accelerator or a flame retardant, may be included in the mixture.

### Example 1 - Conductive Laser Roller

A steel core was coated with an adhesive (Thixon AP 3437 from Morton International, West Alexandria, Ohio). The part was then completely dried.

A 5% solution of copper chloride was prepared as follows. In a one liter container, 475 grams of Fyrol PCF (tri(B-chloropropyl) phosphate, available from Akzo Chemical Inc., Chicago, IL), 475 grams of Fyrol CEF (tri(B-chlorethyl) phosphate, available from Akzo Chemical Inc., Chicago, IL), 50 grams of dried copper chloride (available, from Aldrich Chemical Company, Milwaukee, WI), and 6 grams of Pluracol TP-440 (polyol available from BASF Corporation, Parsippany, NJ) were mixed under mechanical stirring at 200-500 rpm and at 220°F (104°C) for 2 hours. A green solution was obtained.

A 55 gallon (208 litre) resin tank (made by Amplan Inc., Middlesex, NJ, equipped with vacuum, stirring, pressure, venting valves and temperature control) was filled with a polyisocyanate functional prepolymer, Vibrathane 8011 (available from Uniroyal Chemicals, Middlebury, CT) and the temperature raised to, and maintained at, 170°F (77°C). In a 15 liter container, 8200 grams of Isonol 93 (available from the Upjohn Co., Kalamozoo, MI), 1400 grams of TIPA (tributoxyethyl phosphate, available from FMC Corp. of Nitro, WV), 160 grams of copper chloride solution (5%) and 48 grams of Metacure T-12 (dibutylton dilaurate, available from Air Products, Allertown, PA) were mixed with mechanical stirring at 200-500 rpm for 5 minutes at room temperature. The TIPA increases the solubility of the ingredients; the T-12 is a catalyst. The mixture was then degassed for 30 minutes under vacuum. The mixture was transferred to the 5 gallon (18.9 litre) curative tank (made by Amplan Inc. and equipped with a mechanical mixer).

Both the prepolymer and the curative were mixed through an Automatic Process Control dispenser to produce a uniform mixing. By adjusting the flow rate for each tank, 148600 grams of the prepolymer (Vibrathane 8011) and 9800 grams of the curative were mixed thoroughly.

The mixture was charged to each casting mold surrounding the steel cores. The mixture then was cured in the casting mould at 260°F (127°C) for 20 minutes. It was then demoulded and left in the oven at 230°F (110°C) for 12 hours.

The cased roller was then ground to obtain the specified dimensions. The finished part has hardness of 53 Shore A and had electrical resistivity of 3 x 10⁹ ohms-cm.

### Example 2 -- Conductive Laser Roller

A second conductive laser roller was made by an analagous procedure as in Example 1, except that the formulation was changed to the following:

| Components | Weight (grams) |
|---|---|
| 8011 | 148600 |
| I-93 | 8200 |
| TIPA | 1400 |
| Copper Chloride | 800 |
| T-12 | 6 |

The finished part had a hardness of 53 Shore A and a resistivity of 1.5 x 10⁹ ohms-cm.

### Example 3 -- Non-Foam Polyurethane Formulation and the Effect of Varying the Quantity of Metal Salt

This Example shows how resistivity varies as the quantity of metal salt is varied. The composition was made without the addition of a selected solvent as required in the present invention, so that the resultant products do not fall within the scope of this invention. Nevertheless, this Example 3 is still useful in demonstrating that variation of the quantity of metal salt causes a directly equivalent variation in resistivity.

A 0.5% solution of copper chloride (10g) is added to 190g of Metacure T-12 and mixed until the copper chloride dissolved. The resulting copper chloride solution (165g) was mixed with 8200 grams of polyol-234-630 (polyglycol, available from BASF, NJ), and this solution is mixed with 1300 grams of trisopropanolamine 99 (available from Dow Chemical USA, MO) at room temperature. This solution (30.4g) is then vigorously mixed with 455g of Vibrathane 8011 at 90-110°F (32-43°C). The mixture was then poured into multiple cavity moulds and cured at 220-250°F (104-121°C) for 30 minutes. It was demoulded and post-cured in an oven at 220°F (104°C) for 12 hours. The urethane rubber had a resultant resistivity of 3.5 x 10⁹ ohms-cm.

The amount of copper chloride in the material was 0.03%. Further materials were made in which the quantity of copper chloride was increased while the remaining materials remained the same. The resistivity dropped (more conductivity) as the level of copper chloride increased, as follows:

| Amount (grams) of CuCl₂ per 100g of polyol | Resistivity (ohms-cm) |
|---|---|
| 5.0 x 10⁻⁶ | 4.0 x 10¹⁰ |
| 5.0 x 10⁻⁵ | 3.5 x 10⁹ |
| 7 x 10⁻⁵ | 3.0 x 10⁹ |
| 9.4 x 10⁻⁵ | 2.1 x 10⁹ |
| 1.5 x 10⁻⁴ | 1.7 x 10⁹ |
| 2.0 x 10⁻⁴ | 1.2 x 10⁹ |
| 3.0 x 10⁻⁴ | 9.0 x 10⁸ |
| 5.0 x 10⁻⁴ | 7.0 x 10⁸ |
| 9.0 x 10⁻³ | 2.0 x 10⁸ |
| 1.4 x 10⁻² | 7.6 x 10⁷ |
| 1.9 x 10⁻² | 1.8 x 10⁷ |
| 2.5 | 4.4 x 10⁶ |
| 5.0 | 5.0 x 10⁵ |

### Example 4 -- Other Non-Foam Polyurethane Formulations

A metal salt solution (25%) was formulated with 15 grams of the metal salt; 20 grams of a flame retardant, tri-(B-chloropropyl)phosphate; 20 grams of Isonol 93; and 5 grams of tributoxyethyl phosphate. The metal salts that were used in the solution included zinc chloride, cobalt chloride, copper bromide, chromium chloride, and copper chloride, all of which were purchased from Aldrich Chemical Co. of Milwaukee, Wisconsin. The salts were ground and dried prior to use. The solutions were prepared by mechanically mixing at 200-500 rpm at 150°F (65.5°C) for 1-3 hours.

The 25% metal salt solution (50 grams) was combined with a 38 grams of an extender MOCA (4,4'-diamino-3,3'-dichlorodiphenylmethane, available from Palmer Davis Seikra, Inc., NY), and a polyurethane prepolymer, Vibrathane B-601 (a polyester/TDI prepolymer, available from Uniroyal Chemical). This was done by adding first the MOCA and then the prepolymer to the metal solution, with mixing, at 180-220°F (82-104°C). Vigorous mixing continued for 2-5 minutes.

The mixtures were then poured into a multiplecavity metal mould, and the prepolymer was cured at 220-250°F (104-121°C) for 30 minutes. The material was removed from the mould and post-cured in an oven for 12 to 20 hours at 200°F (93°C), after which curing was completed by letting the material sit at room temperature for at least 3 days to complete curing.

The polymeric materials that were obtained had the following resistivities:

| Salt | Resistivity (ohms-cm) |
|---|---|
| zinc chloride | 2.5 x 10¹⁰ |
| cobalt chloride | 1.2 x 10¹⁰ |
| iron chloride | 1.0 x 10⁶ |
| copper bromide | 1 x 10⁶ |
| chromium chloride | 1.9 x 10¹⁰ |
| copper chloride | 5.0 x 10⁶ |

### Example 5 -- Polyurethane Foams

The following conductive foams were prepared according to the same general procedure used above. The numbers in the table are the grams of the particular ingredient included in the example. The metal salt solutions were prepared as described previously; a foam agent such as methylene chloride, H₂O was used. The notes at the end of the table supply further information concerning the ingredients.

**Example #**

| Ingredients | 1 | 2 | 3 | 4 | 5 | 6 | 7 | 8 |
|---|---|---|---|---|---|---|---|---|
| P-380¹ | 450 | 325 | 143 | 155 | 180 | 180 | 180 | 400 |
| DC 200² | 1.8 | 1.8 | 6.6 | 10 | 7 | 6.6 | 7 | 7 |
| Black #4800³ | 6 | 6 | 2.33 | 3.5 | 5 | 2.33 | 5 | - |
| Methylene chloride | 6 | 16 | 4.33 | 65 | 4.33 | 4.33 | 4.33 | 4.33 |
| Water | 3.5 | 3.5 | 1.3 | 2.25 | 1 | 1 | 1 | 0.5 |
| DABCO⁴ | 3.5 | 3.5 | 1.1 | 0.5 | 0.5 | 1.16 | 1 drop | 1 drop |
| B-9-88⁵ | 1 | 1 | 0.33 | 0.5 | 0.33 | 0.33 | 0.33 | 20 |
| T-12⁶ | 0.1 | 0.1 | - | - | - | - | - | - |
| Mondure PF⁷ (22.6%) | 120 | 120 | 56.7 | 70 | 50 | 50 | 50 | 53 |
| Metal Salt | - | 0.5 | 33.3 | 25 | 40 | 40 | 40 | 60 |
| Formula Solution | CuCl₂ 25% | CuCl₂ 25% | FeCl₂ 25% | FeCl₂ 25% | CuCl₂ 15% | FeCl₂ 20% | CuCl₂ 20% | CuCl₂ 2% |
| Shore A | 15Å | 20Å | 20Å | 20Å | 15Å | 20Å | 10Å | 30Å |
| Resistivity (OHMS-cm) | 5x10¹⁰ | 3x10⁹ | 1.2x10⁸ | 9x10⁷ | 5x10⁷ | 3.8x10⁷ | 3x10⁷ | 8x10⁶ |

| | | | | | | | | |
|---|---|---|---|---|---|---|---|---|
| NOTES 1. P-380 (Pluracol polyol 380) is a polyether polyol available from BASF Corporation of Wyandotte, Missouri. | | | | | | | | |
| 2. A silicone surfactant available from Dow Corning. | | | | | | | | |
| 3. Black #4800 is a black pigment from Pigment Dispersions, Inc. | | | | | | | | |
| 4. DABCO is a triethylenediamine catalyst available from Air Products, Inc. | | | | | | | | |
| 5. B-9-88 (Benzoflex 9-88) is a benzoate ester plasticizer available from Harcros Chemicals Inc. | | | | | | | | |
| 6. T-12 is Metacure T-12 catalyst. | | | | | | | | |

A further example of a conductive polyurethane foam included 60g of 20% copper chloride solution, prepared as previously described; 3.5g of trimethylolpropane, (available from Celanese Chemical Company of Dallas, Texas); 7g of DC 200; 0.5g of water; 4.3g of methylene chloride; 20g of the B-9-88; and 400g of Vibrathane 8011. The material was prepared by following the same general procedures previously described. The foam had a resistivity of 8 x 10⁶ ohm/cm.

## Claims

1. A roller comprising a cylinder having a surface comprising a polyurethane including a solid solution of a transition metal halide salt, the polyurethane comprising less than 5% of the transition metal halide salt by weight, wherein the transition metal halide salt is complexed with said polyurethane to provide the polyurethane with a uniform resistivity of between about 10¹² ohms-cm and 10⁵ ohm-cm.

2. A roller as claimed in Claim 1 in which the cylinder does not include an additional conductive coating.

3. A roller as claimed in Claim 1 or Claim 2 in which the transition metal halide salt is selected from the group consisting of CuCl₂, CuBr₂, FeCl₃, and FeBr₃.

4. A roller as claimed in any preceding claim in which the cylinder has uniform conductivity.

5. A roller as claimed in any one of Claims 1 to 3 in which the roller further includes a steel core surrounded by said cylinder.

6. A roller as claimed in any preceding Claim in the form of a toner pick-up roller for a laser printer.

7. A roller as claimed in any preceding Claim in which the polymeric material comprises less than 1% of the transition metal halide salt by weight.

8. A method of preparing a conductive or semiconductive polyurethane roller comprising:
dissolving a transition metal halide salt in a polyol;
mixing the resulting solution with a polyisocyanate functional prepolymer; and
curing the mixture in a roller casting mould to provide a cylinder having a surface comprising polyurethane comprising less than 5% of the transition metal halide which transition metal halide is complexed to the polyurethane and a resistivity of 10¹² ohms-cm and 10⁵ ohms-cm-cm.

9. A method as claimed in Claim 8 in which the transition metal halide salt is selected from the group consisting of CuCl₂, CuBr₂, FeCl₃, and FeBr₃.

10. A method as claimed in Claim 8 or Claim 9 further comprising removing the polyurethane cylinder from the mould and post-curing.

## Claims (Claims for the following Contracting State(s): BE, DE, FR, GB, NL)

1. A roller comprising a cylinder having a surface comprising a polyurethane including a solid solution of a transition metal halide salt, the polyurethane comprising less than 5% of the transition metal halide salt by weight, wherein the transition metal halide salt is complexed with said polyurethane to provide the polyurethane with a uniform resistivity of between about 10¹² ohms-cm and 10⁵ ohm-cm with the proviso that the polyurethane is not a resilient elastomeric polyurethane formed by reacting:
(a) a polyisocyanate prepolymer comprising the reaction product of:
(i) a saturated aliphatic polyisocyanate, a saturated cycloaliphatic polyisocyanate or an aromatic polyisocyante; and
(ii) a polyol free of aliphatic unsaturation; and
(b) a hardening mixture comprising:
(i) a polyol of (a) (ii) or a diamine free of aliphatic unsaturation, or a mixture thereof; and,
(ii) as a conductivity control agent for controlling the resistivity of the elastomeric polyurethane, from 0.001 to 5.0 weight percent, based on the total weight of (b), of a complex of ethylene glycol or an oligoethylene glycol selected from the group consisting of di-tri-and tetraethylene glycol with an ionizable ferric halide salt selected from the group consisting of ferric fluoride, ferric chloride and ferric bromide.

2. A roller as claimed in Claim 1 in which the cylinder does not include an additional conductive coating.

3. A roller as claimed in Claim 1 or Claim 2 in which the transition metal halide salt is selected from the group consisting of CuCl₂, CuBr₂, FeCl₃, and FeBr₃.

4. A roller as claimed in any preceding claim in which the cylinder has uniform conductivity.

5. A roller as claimed in any one of Claims 1 to 3 in which the roller further includes a steel core surrounded by said cylinder.

6. A roller as claimed in any preceding Claim in the form of a toner pick-up roller for a laser printer.

7. A roller as claimed in any preceding Claim in which the polymeric material comprises less than 1% of the transition metal halide salt by weight.

8. A method of preparing a conductive or semiconductive polyurethane roller comprising:
dissolving a transition metal halide salt in a polyol;
mixing the resulting solution with a polyisocyanate functional prepolymer; and
curing the mixture in a roller casting mould to provide a cylinder having a surface comprising polyurethane comprising less than 5% of the transition metal halide which transition metal halide is complexed to the polyurethane and a resistivity of 10¹² ohms-cm and 10⁵ ohms-cm-cm, with the proviso that the polyurethane is not a resilient elastomeric polyurethane formed by reacting:
(a) a polyisocyanate prepolymer comprising the reaction product of:
(i) a saturated aliphatic polyisocyanate, a saturated cycloaliphatic polyisocyanate or an aromatic polyisocyante; and
(ii) a polyol free of aliphatic unsaturation; and
(b) a hardening mixture comprising:
(i) a polyol of (a) (ii) or a diamine free of aliphatic unsaturation, or a mixture thereof; and,
(ii) as a conductivity control agent for controlling the resistivity of the elastomeric polyurethane, from 0.001 to 5.0 weight percent, based on the total weight of (b), of a complex of ethylene glycol or an oligoethylene glycol selected from the group consisting of di-tri-and tetraethylene glycol with an ionizable ferric halide salt selected from the group consisting of ferric fluoride, ferric chloride and ferric bromide.

9. A method as claimed in Claim 8 in which the transition metal halide salt is selected from the group consisting of CuCl₂, CuBr₂, Fecl₃, and FeBr₃.

10. A method as claimed in Claim 8 or Claim 9 further comprising removing the polyurethane cylinder from the mould and post-curing.
